# EUROPEAN PATENT APPLICATION

(11) **EP 4 667 330 A1**
(43) Date of publication of application: **24.12.2025**
(21) Application number: 25181678.1
(22) Date of filing: 10.06.2025
(51) Int. Cl.: B62D 25/08, B62D 29/00

(54) **VEHICLE BODY STRUCTURE AND METHOD OF MANUFACTURING VEHICLE BODY STRUCTURE**

(30) Priority: 17.06.2024 JP 2024097320
(71) Applicant: MAZDA MOTOR CORPORATION, Hiroshima 730-8670 (JP)
(72) Inventor: SHIMANAKA, Tsuneki, Aki-gun, Hiroshima, 730-8670 (JP)
(74) Representative: Müller-Boré & Partner Patentanwälte PartG mbB

(57) **Abstract**

A vehicle body structure includes a vehicle body frame member (100) that is integrally molded by casting in a state where a right suspension tower portion (110) and a left suspension tower portion (120) are coupled by an intermediate portion (130). The vehicle body frame member (100) includes a coupling member (150) that extends in a left-right direction at a position away from the intermediate portion (130) by a predetermined distance in a vehicle front-rear direction or an up-down direction and couples a right side and a left side of the vehicle body frame member (100).

## Description

### [Technical Field]

The present invention relates to a vehicle body structure of a vehicle, particularly an automobile, for example. The present invention also relates to a method of manufacturing a vehicle body structure.

### [Background Art]

For example, in a rear portion of an automobile, a suspension tower portion, to which an upper portion of a damper of a suspension device is attached, is provided on each of left and right sides. Patent Literature 1 discloses that a reinforcing member that includes a suspension tower portion is integrally molded by aluminum die casting.

### [Citation List]

### [Patent Literature]

[Patent Literature 1] JP2020-44885A

### [Summary]

### [Technical Problem]

Here, from a viewpoint of reducing the number of components of a vehicle body, it is considered to obtain a frame member in a rear portion of the vehicle body by coupling a right suspension tower portion and a left suspension tower portion by a coupling portion and, in such a state, integrally molding those by casting.

However, the damper is a member that is long in an up-down direction, and has to secure an extension and/or contraction stroke amount in the up-down direction, and accordingly, a dimension of the suspension tower portion in the up-down direction becomes long. When the dimension of the suspension tower portion in the up-down direction is increased, it is difficult to secure rigidity only by coupling using the coupling portion.

The present invention has been made in view of such a point, and an object thereof is to improve rigidity of a vehicle body frame member that is integrally molded in a state where left and right suspension tower portions are coupled by an intermediate portion in a vehicle width direction.

### [Solution to Problem]

The above object is achieved by the invention as defined in independent claims. Particularly, an aspect is a vehicle body structure including a vehicle body frame member that is integrally or unitarily molded by casting in a state where a right suspension tower portion and a left suspension tower portion are coupled by an intermediate portion in a vehicle width direction. The vehicle body frame member includes a coupling member that extends in a left-right direction (or a vehicle width direction) at a position away from the intermediate portion, e.g., by a predetermined distance, in a vehicle front-rear direction (or a longitudinal direction) and/or an up-down direction (or a vertical direction) and couples a right side and a left side of the vehicle body frame member.

According to this configuration, since the right suspension tower portion and the left suspension tower portion are integrally or unitarily molded via the intermediate portion in the vehicle body frame member, the number of components of the vehicle body frame member is reduced. In addition, since the right side and the left side of the vehicle body frame member are coupled by the different coupling member from the intermediate portion, the right suspension tower portion and the left suspension tower portion can be coupled at plural positions by the intermediate portion and the coupling member. In addition thereto, since the coupling member and the intermediate portion are spaced apart in the vehicle front-rear direction and/or the up-down direction, a reinforcing effect by providing the coupling member is improved.

A right coupling portion, to which a right side of the coupling member can be coupled, may be provided in an upper portion of the right suspension tower portion. Particularly, a left coupling portion, to which a left side of the coupling member can be coupled, may be provided in an upper portion of the left suspension tower portion. According to this configuration, the right side and the left side of the coupling member can be fixed firmly to the upper portion of the right suspension tower portion and the upper portion of the left suspension tower portion.

The right suspension tower portion may be provided with a right damper attachment portion, to which an upper portion of a right damper of a suspension device is attached. In this case, the right coupling portion can be provided at a position that is separated upward from the right damper attachment portion. The left suspension tower portion may be provided with a left damper attachment portion, to which an upper portion of a left damper of the suspension device is attached. In this case, the left coupling portion can be provided at a position that is separated upward from the left damper attachment portion.

According to this configuration, since the coupling member can be positioned above the damper attachment portion, it is possible to secure a long distance from the intermediate portion. This further enhances the reinforcing effect by providing the intermediate portion and the coupling member.

The coupling member may include: an upper coupling member that couples the upper portion of the right suspension tower portion and the upper portion of the left suspension tower portion; and a lower coupling member that couples a lower portion of the right suspension tower portion and a lower portion of the left suspension tower portion.

According to this configuration, since the upper portions and the lower portions of the right suspension tower portion and the left suspension tower portion can be coupled to each other, rigidity of the vehicle body frame member can further be improved.

The upper coupling member may be separated rearward in a vehicle from the intermediate portion, and the lower coupling member may be separated forward in the vehicle from the intermediate portion. According to this configuration, the lower coupling member, the intermediate portion, and the upper coupling member are arranged in this order from the front to the rear of the vehicle. In this way, the rigidity of the vehicle body frame member can further be increased.

The vehicle body structure may include: a floor panel formed with a tunnel portion that bulges upward in a central portion in the left-right direction and extends in the vehicle front-rear direction; a right cross member that extends from a right side of the floor panel to a right side surface of the tunnel portion in an upper surface of the floor panel; a left cross member that extends from a left side of the floor panel to a left side surface of the tunnel portion in the upper surface of the floor panel; and a tunnel member that extends across the tunnel portion in the left-right direction in a lower surface of the floor panel. A right side of the right cross member can be coupled to a lower portion of the right suspension tower portion, and a left side of the left cross member can be coupled to a lower portion of the left suspension tower portion. Furthermore, a right side of the tunnel member can be coupled to a left side of the right cross member, and a left side of the tunnel member can be coupled to a right side of the left cross member. In this case, the right cross member, the left cross member, and the tunnel member can constitute the coupling member. That is, the right cross member, the left cross member, and the tunnel member for increasing rigidity of the floor panel can be used to couple the right side and the left side of the vehicle body frame member. In addition, by using the right cross member, the left cross member, and the tunnel member, the vehicle body frame member can be coupled to the tunnel portion having high rigidity. Thus, this can also increase the rigidity of the vehicle body frame member.

A vehicle rear portion of the tunnel portion may be connected to the intermediate portion. In this way, the intermediate portion can be coupled to the tunnel portion having the high rigidity, and thus the rigidity of the vehicle body frame member can further be increased.

### [Advantageous Effects of Invention]

As it has been described so far, since the coupling member that couples the right side and the left side of the vehicle body frame member is provided at the position away from the intermediate portion that couples the right suspension tower portion and the left suspension tower portion, the rigidity of the vehicle body frame member can be improved.

### [Brief Description of Drawings]

[FIG. 1] FIG. 1 is a side view of an automobile that has a vehicle body structure according to an embodiment of the present invention.
[FIG. 2] FIG. 2 is a plan view of the vehicle body structure.
[FIG. 3] FIG. 3 is a bottom view of the vehicle body structure.
[FIG. 4] FIG. 4 is a cross-sectional view that is taken along line IV-IV in FIG. 2.
[FIG. 5] FIG. 5 is a perspective view of a rear frame member.
[FIG. 6] FIG. 6 is a plan view of the rear frame member.
[FIG. 7] FIG. 7 is a front view of the rear frame member.
[FIG. 8] FIG. 8 is a view in which a right portion of the rear frame member is viewed from an obliquely upper left side.
[FIG. 9] FIG. 9 is a left view of the right portion of the rear frame member.

### [Description of Embodiments]

A detailed description will hereinafter be made on an embodiment of the invention with reference to the drawings. It should be noted that the following description of the preferred embodiment is merely illustrative in nature and is not intended to limit the invention, application subjects thereof, or application thereof.

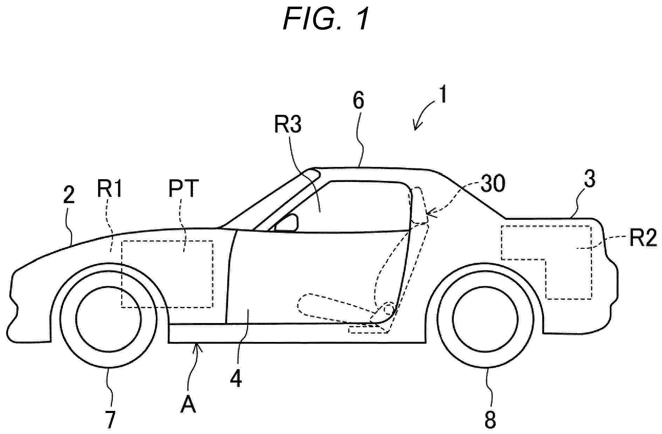

FIG. 1 is a side view of a vehicle, particularly an automobile 1, that has a vehicle body structure A according to the embodiment of the invention. In the description of this embodiment, a vehicle front side will simply be referred to as "front", a vehicle rear side will simply be referred to as "rear", a vehicle right side will simply be referred to as "right", and a vehicle left side will simply be referred to as "left". A vehicle left-right direction is a vehicle width direction.

The automobile 1 is a passenger automobile, for example, and may be an automobile of a coupe type, a hatchback type, or a sedan type, for example. The automobile 1 may be an automobile that is equipped with an internal combustion engine that generates a driving force transmitted to drive wheels, may be an electric vehicle that is equipped with a travel motor that generates a driving force transmitted to drive wheels, or may be a hybrid vehicle that generates a driving force transmitted to drive wheels by an internal combustion engine and a driving force generation motor. The internal combustion engine and/or the motor constitute a powertrain PT.

A bonnet hood 2 may be provided in a front portion of the automobile 1. A front space R1 in which the powertrain PT is mounted when necessary is provided below the bonnet hood 2.

A rear hood 3 may be provided in a rear portion of the automobile 1. A rear space R2 capable of accommodating baggage and the like may be provided below the rear hood 3.

Instead of mounting the powertrain PT in the front space R1, a powertrain (not illustrated) may be mounted in the rear space R2. In this case, the front space R1 can be used as a space for accommodating the baggage and the like. Alternatively, the powertrain may be mounted in both the front space R1 and the rear space R2.

A left door 4 and a right door (not illustrated) are openably and/or closably provided in a left portion and a right portion of the automobile 1, respectively. The automobile 1 may also include front wheels 7 and rear wheels 8 on left and right sides. At least one of the front wheel 7 and the rear wheel 8 can be a drive wheel.

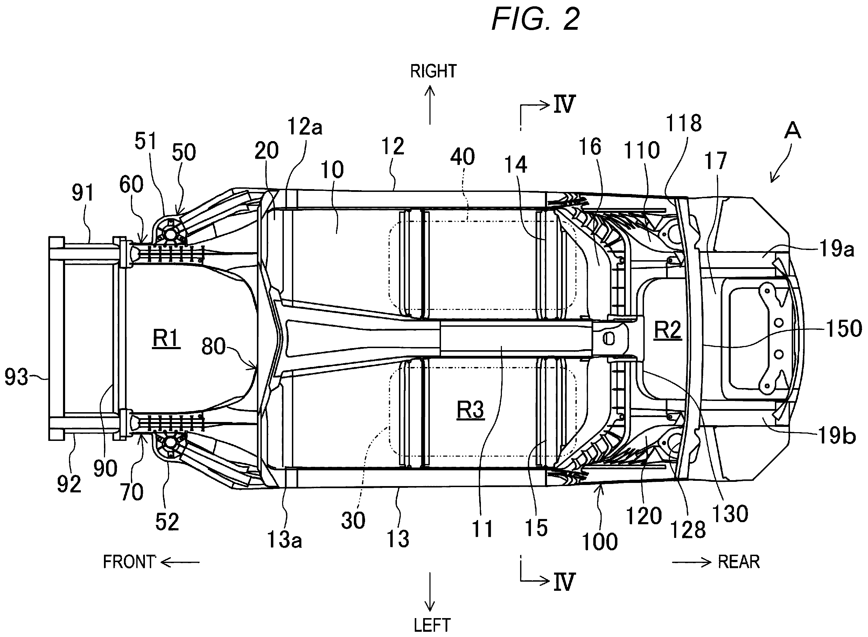

A cabin R3 e.g., as a living space for an occupant is provided between the front space R1 and the rear space R2. As illustrated in FIG. 2, the vehicle body structure A may include: a floor panel 10 that forms a floor surface of the cabin R3; and a dash panel 20 that forms a front wall of the cabin R3. The vehicle body structure A of the automobile 1 may also include: an inclined panel 16 that extends upward from a rear end portion of the floor panel 10 and is inclined rearward toward the above; and/or a rear panel 17 that extends rearward from an upper end portion of the inclined panel 16.

A tunnel portion 11 that bulges upward and extends in a front-rear direction (or a longitudinal direction) may be formed in a central portion of the floor panel 10 in the left-right direction. The automobile 1 may further include: a right side sill 12 that extends in the front-rear direction along a right edge of the floor panel 10; and a left side sill 13 that extends in the front-rear direction along a left edge of the floor panel 10.

A right hinge pillar 12a that extends upward may be provided in a front portion of the right side sill 12. The right hinge pillar 12a is a member that supports the right door. A left hinge pillar 13a that extends upward may be provided in a front portion of the left side sill 13. The left hinge pillar 13a is a member that supports the left door 4.

A front end portion of the tunnel portion 11 may be located in a front end portion of the floor panel 10, and a rear end portion of the tunnel portion 11 may be located in the rear end portion of the floor panel 10. Thus, the tunnel portion 11 has a shape that continuously extends from the front end portion to the rear end portion of the floor panel 10.

For example, the vehicle body structure A includes: one or more right cross members 14 that extend from a right side of the floor panel 10 to a right side surface of the tunnel portion 11 on an upper surface of the floor panel 10; and one or more left cross members 15 that extends from a left side of the floor panel 10 to a left side surface of the tunnel portion 11 on the upper surface of the floor panel 10. In the present embodiment, for example, two right cross members 14 are spaced apart from each other in the front-rear direction, and two left cross members 15 are spaced apart from each other in the front-rear direction.

The right cross member 14 on a front side and the left cross member 15 on a front side may be arranged in a manner to be aligned on the same straight line that extends in the left-right direction. The right cross member 14 on a rear side and the left cross member 15 on a rear side may also be arranged in a manner to be aligned on the same straight line that extends in the left-right direction.

For example, each of the right cross members 14 is formed along the upper surface of the floor panel 10 on a right side of the tunnel portion 11, and is fixed to the upper surface of the floor panel 10. A right end portion of the right cross member 14 may be fixed to a side surface on a vehicle inner side of the right side sill 12 while a left end portion of the right cross member 14 may be fixed to the right side surface of the tunnel portion 11.

Particularly, each of the left cross members 15 is formed along the upper surface of the floor panel 10 on a left side of the tunnel portion 11, and is fixed to the upper surface of the floor panel 10. A left end portion of the left cross member 15 may be fixed to a side surface on the vehicle inner side of the left side sill 13 while a right end portion of the left cross member 15 may be fixed to the left side surface of the tunnel portion 11.

For example, the automobile 1 is a right-hand drive vehicle. Thus, the automobile 1 may include a passenger seat 30 as a left seat (seating) and a driver's seat 40 as a right seat (seating) on the left side and the right side of the tunnel portion 11 on the floor panel 10, respectively.

Particularly, the passenger seat 30 is provided on the left side of the tunnel portion 11 on the floor panel 10, and the passenger seat 30 is arranged between the tunnel portion 11 and the left side sill 13. The driver's seat 40 is provided on the right side of the tunnel portion 11 on the floor panel 10, and the driver's seat 40 is arranged between the tunnel portion 11 and the right side sill 12. Thus, the passenger seat 30 and the driver's seat 40 are arranged side by side in the left-right direction in a manner to sandwich the tunnel portion 11.

A lower portion of the driver's seat 40 may be attached to the two right cross members 14. A lower portion of the passenger seat 30 may be attached to the two left cross members 15.

Here, the automobile 1 may be a left-hand drive vehicle. In this case, the driver's seat 40 may be provided on the left side, and the passenger seat 30 may be provided on the right side. Further, a rear seat may be provided behind the driver's seat 40 and the passenger seat 30.

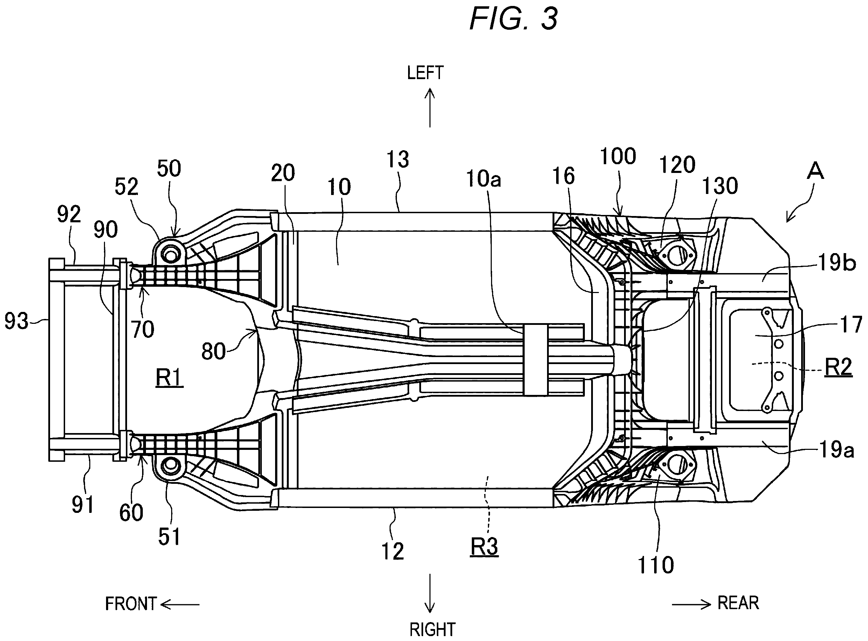

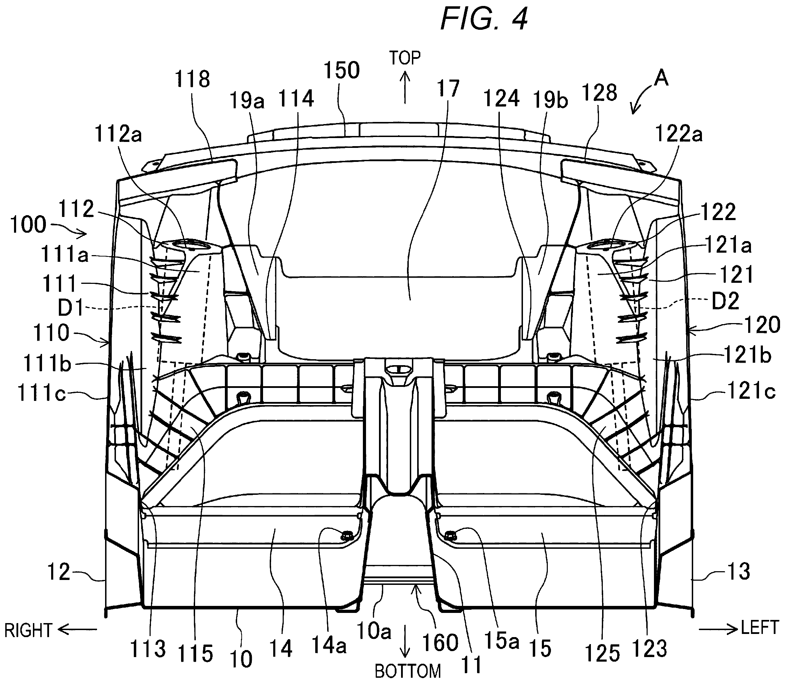

As illustrated in FIG. 3 and FIG. 4, the vehicle body structure A may include a tunnel member 10a that extends across the tunnel portion 11 in the left-right direction on the lower surface of the floor panel 10. The tunnel member 10a is a reinforcing member that is positioned below the right cross member 14 and the left cross member 15 on the rear side and that suppresses deformation of the tunnel portion 11, which is opened downward, to be opened in the left-right direction.

For example, a right side of the tunnel member 10a extends to the right side of the right side surface of the tunnel portion 11, and is in a positional relationship that overlaps a left side of the right cross member 14 in a plan view. The right side of the tunnel member 10a and the left side of the right cross member 14 may be fixed to and integrated with the floor panel 10 by a fastening member 14a, for example.

Particularly, a left side of the tunnel member 10a extends to the left side of the left side surface of the tunnel portion 11, and is in a positional relationship that overlaps a right side of the left cross member 15 in the plan view. The left side of the tunnel member 10a and the right side of the left cross member 15 may be fixed to and integrated with the floor panel 10 by a fastening member 15a, for example. That is, the right cross member 14 and the left cross member 15 may be coupled via the tunnel member 10a to constitute a reinforcing member.

As illustrated in FIG. 2 and FIG. 3, the dash panel 20 may be a member that extends upward and in the left-right direction from the front end portion of the floor panel 10 and that divides the cabin R3 and the front space R1 located on the front side of the cabin R3. The front end portion of the tunnel portion 11 is connected to a central portion in the left-right direction of a lower portion of the dash panel 20.

A front cast member 50 is provided in the front portion of the automobile 1. For example, the front cast member 50 includes a right front side frame 60, a left front side frame 70, a coupling portion 80 that couples the right front side frame 60 and the left front side frame 70, a right front suspension tower portion 51, and a left front suspension tower portion 52.

The front space R1 is provided between the right front side frame 60 and the left front side frame 70. The right front side frame 60, the left front side frame 70, and the coupling portion 80 may be integrally or unitarily molded by casting.

A rear portion of the left front side frame 70 and a rear portion of the right front side frame 60 may be fixed to the dash panel 20. A rear portion of the coupling portion 80 may be fixed to front portions of the dash panel 20 and the tunnel portion 11.

When the right front side frame 60, the left front side frame 70, and the coupling portion 80 are fixed to the dash panel 20 and the tunnel portion 11, any of various fixing methods, such as fixing by welding and fastening fixing using a fastening member (including, a self-piercing rivet, for example), can be applied. Of these fixing methods, any one of the fixing methods may be employed, or any two or more of the fixing methods may be used in combination.

The vehicle body structure A may include a vehicle body frame member, particularly a rear vehicle body frame member 100 provided on a rear portion. For example, the rear vehicle body frame member 100 that is integrally or unitarily molded by casting is provided above the inclined panel 16.

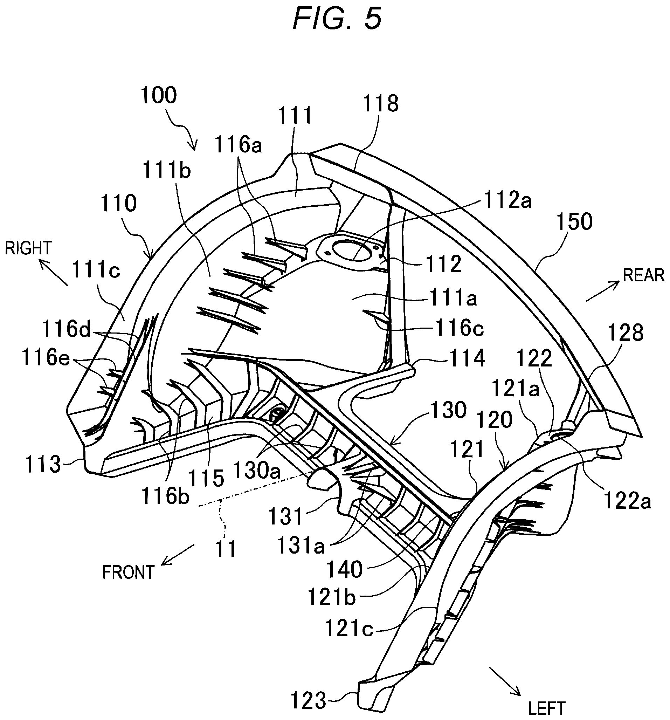

The rear vehicle body frame member 100 includes a right rear suspension tower portion (or a right suspension tower portion) 110, a left rear suspension tower portion (or a left suspension tower portion) 120, and an intermediate portion 130. As illustrated in FIG. 5 to FIG. 7, the intermediate portion 130 is a portion that is provided in an intermediate portion in the left-right direction of the rear vehicle body frame member 100 and couples the right rear suspension tower portion 110 and the left rear suspension tower portion 120.

The right rear suspension tower portion 110 and the left rear suspension tower portion 120 are integrally or unitarily molded by casting in a state of being coupled by the intermediate portion 130. When the rear vehicle body frame member 100 is manufactured, an aluminum die casting method can be used, for example.

As illustrated in FIG. 2, a front end portion of a frame, particularly a right rear frame 19a, that extends rearward may be connected to a rear portion of the right rear suspension tower portion 110. For example, the right rear frame 19a is arranged on the vehicle inner side of the right side sill 12 and is located above the right side sill 12.

A front end portion of a frame, particularly a left rear frame 19b, that extends rearward may be connected to a rear portion of the left rear suspension tower portion 120.

For example, the left rear frame 19b is arranged on the vehicle inner side of the left side sill 13 and is located above the left side sill 13. The rear panel 17 may be provided to connect the right rear frame 19a and the left rear frame 19b. The vehicle may include the right rear frame (19a) and/or the left rear frame (19b).

As illustrated in FIG. 4 to FIG. 7, the right rear suspension tower portion 110 may have a right wheelhouse portion 111 that forms a wheelhouse of a right rear wheel (not illustrated). The right wheelhouse portion 111 has a concave shape that extends in an up-down direction (or a vertical direction) and the front-rear direction and that is recessed toward the vehicle inner side and the front side. For example, a rear side and a lower side of this right wheelhouse portion 111 are both open, and the right wheelhouse portion 111 thereby has a dome shape.

The right wheelhouse portion 111 may include: a right bulging portion 111a that bulges to the vehicle inner side; and/or a right plate portion 111b that extends in the up-down direction and the front-rear direction from an upper portion to a front portion of the right bulging portion 111a. A right damper attachment portion 112 may be provided near the upper portion of the right bulging portion 111a.

For example, the right damper attachment portion 112 is a plate-shaped portion to which an upper portion of a damper D1 provided in a rear suspension device is attached, and extends in the front-rear direction and the left-right direction. An opening 112a is formed in the right damper attachment portion 112.

A right flange portion 111c may be formed in a peripheral edge portion of the right plate portion 111b. The right flange portion 111c continuously extends from an upper portion to a lower portion via a front portion of the right wheelhouse portion 111.

A right front connection portion 113 that is connected to a rear end portion of the right side sill 12 may be formed in a front lower portion of the right wheelhouse portion 111. In addition, a right rear connection portion 114, that is connected to a rear end portion of the right rear frame 19a, may be formed in a rear lower portion of the right wheelhouse portion 111. The right rear connection portion 114 is located on the vehicle inner side and/or above the right front connection portion 113.

A right load transmission portion 115 that extends from the right front connection portion 113 to the right rear connection portion 114 may be provided in the lower portion of the right wheelhouse portion 111. For example, the right load transmission portion 115 is inclined to be located outward in the vehicle and downward to the front.

The left rear suspension tower portion 120 and the right rear suspension tower portion 110 may have a bilaterally symmetrical structure. For example, when an imaginary line that extends in the front-rear direction through a center of the automobile 1 in the left-right direction is set as a center of the symmetry, the left rear suspension tower portion 120 is line-symmetric with the right rear suspension tower portion 110, and the right rear suspension tower portion 110 is line-symmetric with the left rear suspension tower portion 120.

That is, the left rear suspension tower portion 120 may have a left wheelhouse portion 121 that forms a wheelhouse of the left rear wheel 8 (illustrated in FIG. 1). The left wheelhouse portion 121 has a concave shape that extends in the up-down direction and the front-rear direction and that is recessed toward the vehicle inner side and the front side. For example, a rear side and a lower side of this left wheelhouse portion 121 are both open, and the left wheelhouse portion 121 thereby has a dome shape.

The left wheelhouse portion 121 may include: a left bulging portion 121a that bulges to the vehicle inner side; and a left plate portion 121b that extends in the up-down direction and the front-rear direction from an upper portion to a front portion of the left bulging portion 121a. A left damper attachment portion 122, to which an upper portion of a right damper D2 provided in the rear suspension device is attached, may be provided near the upper portion of the left bulging portion 121a. The left damper attachment portion 122 has an opening 122a.

A left flange portion 121c may be formed in a peripheral edge portion of the left plate portion 121b. The left flange portion 121c continuously extends from an upper portion to a lower portion via a front portion of the left wheelhouse portion 121.

A left front connection portion 123 that is connected to a rear end portion of the left side sill 13 may be formed in a front lower portion of the left wheelhouse portion 121. In addition, a left rear connection portion 124, that is connected to a rear end portion of the left rear frame 19b, may be formed in a rear lower portion of the left wheelhouse portion 121. The left rear connection portion 124 is located on the vehicle inner side and above the left front connection portion 123.

A left load transmission portion 125 that extends from the left front connection portion 123 to the left rear connection portion 124 may be provided in the lower portion of the left wheelhouse portion 121. For example, the left load transmission portion 125 is inclined to be located outward in the vehicle and downward to the front.

Accordingly, for example, an impact load during a rear collision is input to the right wheelhouse portion 111 via the right rear frame 19a. The impact load that has been input to the right wheelhouse portion 111 is transmitted to the right side sill 12 via the right rear connection portion 114, the right load transmission portion 115, and the right front connection portion 113.

The impact load during the rear collision is input to the left wheelhouse portion 121 via the left rear frame 19b. The impact load that has been input to the left wheelhouse portion 121 is transmitted to the left side sill 13 via the left rear connection portion 124, the left load transmission portion 125, and the left front connection portion 123.

Just as described, since the rear vehicle body frame member 100 is a member that receives the impact load during the rear collision and transmits it to the right side sill 12 and the left side sill 13, it is necessary to increase rigidity to the input of the impact load. Thus, one or more ribs are integrally or unitarily molded with the rear vehicle body frame member 100.

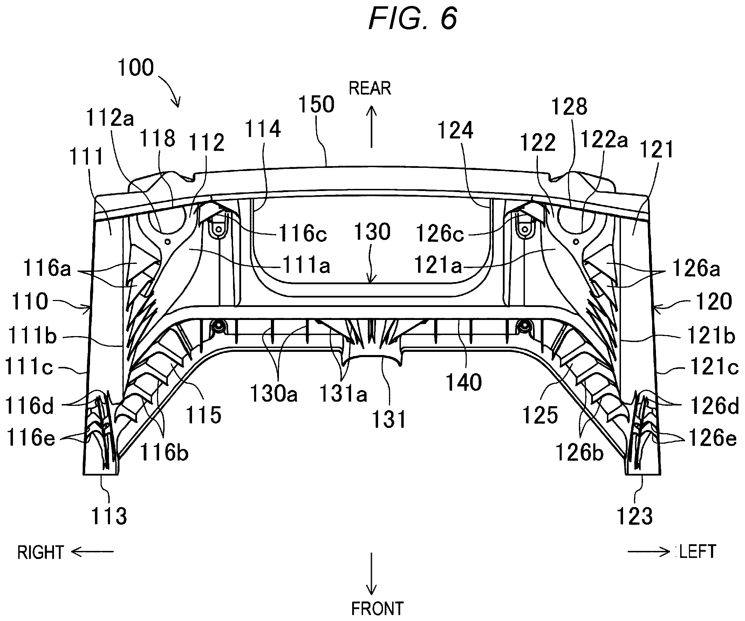

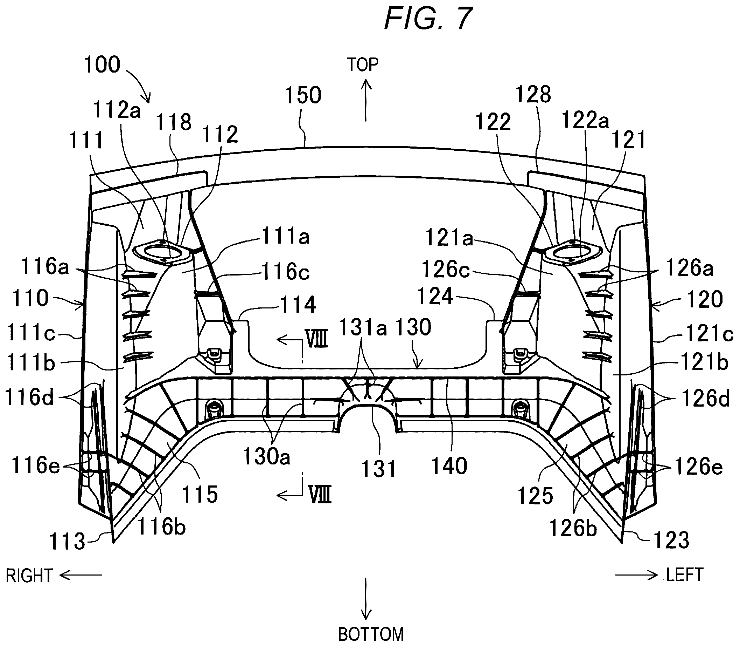

For example, as illustrated in FIG. 5 to FIG. 7, a first right inner rib 116a, a second right inner rib 116b, a third right inner rib 116c, a fourth right inner rib 116d, and a fifth right inner rib 116e are integrally or unitarily molded on the vehicle inner side of the right wheelhouse portion 111. Although the detailed description is omitted, similar to the right wheelhouse portion 111, plural ribs 126a to 126e (illustrated in FIG. 6 and FIG. 7) may be integrally or unitarily molded on the vehicle inner side of the left wheelhouse portion 121.

As illustrated in FIG. 5 and FIG. 6, the intermediate portion 130 extends in the left-right direction from the right rear suspension tower portion 110, particularly an intermediate portion in the front-rear direction in a lower portion of the right rear suspension tower portion 110 to the left rear suspension tower portion 120, particularly an intermediate portion in the front-rear direction in a lower portion of the left rear suspension tower portion 120. One or plural first lower ribs 130a, each of which protrudes forward and/or extends in the up-down direction, may be provided on a front surface of the intermediate portion 130 at spaced intervals from each other in the left-right direction.

For example, a curved plate portion 131 that is curved upward is provided in a center portion in the left-right direction of the intermediate portion 130. On an upper surface of the curved plate portion 131, one or plural second lower ribs 131a, each of which protrudes upward and/or extends forward, may be provided at spaced intervals from each other in a circumferential direction of the curved plate portion 131.

A rear portion of the tunnel portion 11 of the floor panel 10 may be connected to the curved plate portion 131 of the intermediate portion 130. In this way, the intermediate portion 130 can be coupled to the tunnel portion 11 having high rigidity.

The rear vehicle body frame member 100 may include a rib, particularly a long rib 140, that extends or continues from the right rear suspension tower portion 110 to the intermediate portion 130 and extends or continues to the left rear suspension tower portion 120. A right portion of the long rib 140 is integrally or unitarily molded with the front portions of the right bulging portion 111a and the right plate portion 111b. A left portion of the long rib 140 is integrally or unitarily molded with front portions of the left bulging portion 121a and the left plate portion 121b.

The vehicle body structure A includes an upper coupling member 150 that extends in the left-right direction at a position away from the intermediate portion 130, e.g., by a predetermined distance, in the front-rear direction and/or the up-down direction and that couples a right side and a left side of the vehicle body frame member 100. The upper coupling member 150 in the present embodiment may be a member that couples the upper portion of the right rear suspension tower portion 110 and the upper portion of the left rear suspension tower portion 120, and can be referred to as a deck member or the like. The upper coupling member 150 may be formed of, for example, a press-molded plate material or may be formed of an extruded member.

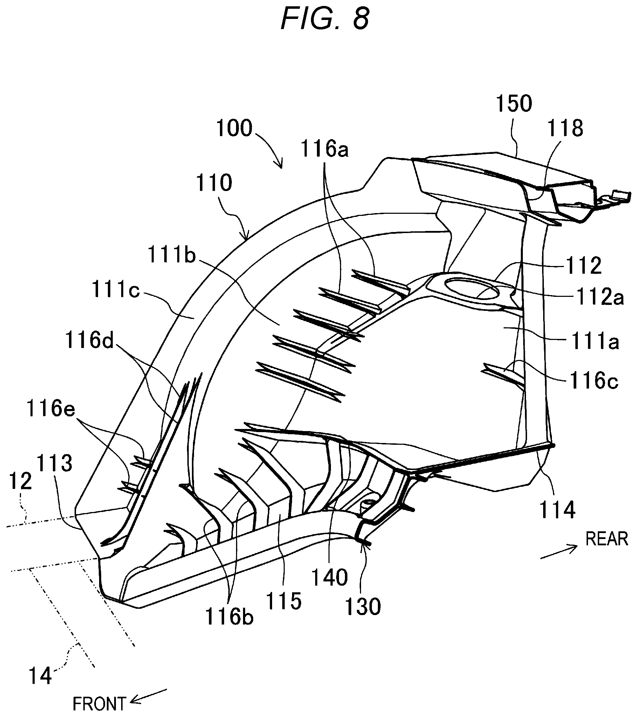

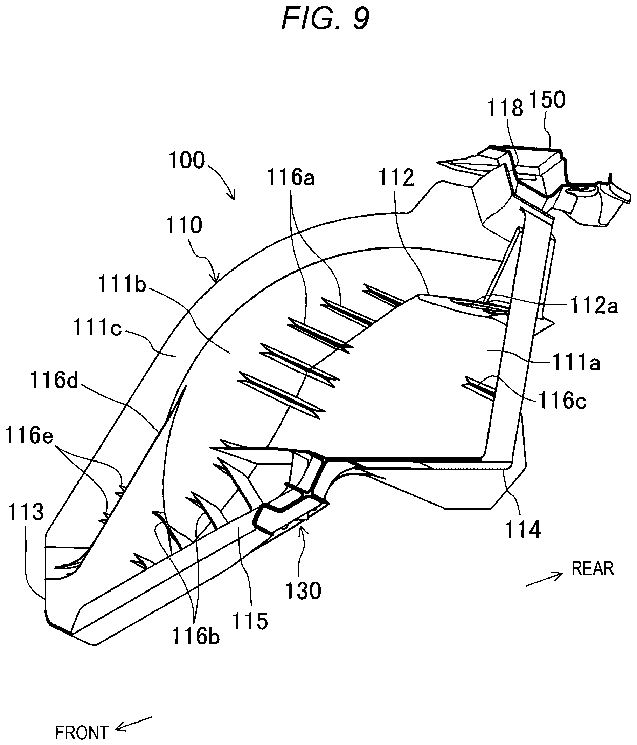

Particularly, the upper coupling member 150 is separated upward from the intermediate portion 130 and is also separated rearward from the intermediate portion 130. That is, as illustrated in FIG. 8 and FIG. 9, a right coupling portion 118 to which a right side of the upper coupling member 150 can be coupling may be provided in the upper portion of the right rear suspension tower portion 110. For example, the right coupling portion 118 has a plate shape that is separated upward from the right damper attachment portion 112 and extends in the left-right direction. The right side of the upper coupling member 150 is fixed to the right coupling portion 118 e.g., by welding or a fastening member.

Further particularly, a left coupling portion 128, to which a left side of the upper coupling member 150 can be coupled, may be provided in the upper portion of the left rear suspension tower portion 120. For example, the left coupling portion 128 has a plate shape that is separated upward from the left damper attachment portion 122 and extends in the left-right direction. The left side of the upper coupling member 150 is fixed to the left coupling portion 128 e.g., by welding or a fastening member.

Although not illustrated, the upper coupling member 150 may be a header that is arranged at a position separated upward from the upper portions of the right rear suspension tower portion 110 and the left rear suspension tower portion 120.

As illustrated in FIG. 4, the right cross member 14, the left cross member 15, and the tunnel member 10a may be lower coupling members 160 that couple the lower portion of the right rear suspension tower portion 110 and the lower portion of the left rear suspension tower portion 120. That is, since a right side of the right cross member 14 is fixed to the right side sill 12, and the right front connection portion 113, which is formed in the lower portion of the right rear suspension tower portion 110, is connected to the right side sill 12, the right side of the right cross member 14 is coupled to the right front connection portion 113 of the right rear suspension tower portion 110 via the right side sill 12. In addition, since a left side of the left cross member 15 is fixed to the left side sill 13, and the left front connection portion 123, which is formed in the lower portion of the left rear suspension tower portion 120, is connected to the left side sill 13, the left side of the left cross member 15 is coupled to the left front connection portion 123 of the left rear suspension tower portion 120 via the left side sill 13. Alternatively, the right side of the right cross member 14 may directly be coupled to the lower portion of the right rear suspension tower portion 110, and/or the left side of the left cross member 15 may directly be coupled to the lower portion of the left rear suspension tower portion 120.

For example, the lower coupling member 160 is separated downward from the intermediate portion 130 and is also separated forward from the intermediate portion 130. Thus, in a front view, the intermediate portion 130 is arranged between the upper coupling member 150 and the lower coupling member 160. Also, in the plan view, the intermediate portion 130 is arranged between the upper coupling member 150 and the lower coupling member 160.

### (Operational Effects of Embodiment)

As it has been described so far, in the present embodiment, the right rear suspension tower portion 110 and the left rear suspension tower portion 120 are integrally or unitarily molded by casting via the intermediate portion 130. Accordingly, the right rear suspension tower portion 110, the left rear suspension tower portion 120, and the intermediate portion 130 serve as one component, and thus the number of components of the rear vehicle body frame member 100 is reduced.

In addition, the right rear suspension tower portion 110 and the left rear suspension tower portion 120 of the rear vehicle body frame member 100 are coupled by the upper coupling member 150 and/or the lower coupling member 160. Since the upper coupling member 150 is separated upward and rearward from the intermediate portion 130, and the lower coupling member 160 is separated downward and forward from the intermediate portion 130, portions of the right rear suspension tower portion 110 and the left rear suspension tower portion 120 that are separated from each other can be coupled by a highly rigid member. In this way, the rigidity of the rear vehicle body frame member 100 can be improved.

Particularly, since the right cross member 14, to which the driver's seat 40 (or the passenger seat 30) is attached, and the left cross member 15, to which the passenger seat 30 (or the driver's seat 40) is attached, are used to couple the right rear suspension tower portion 110 and the left rear suspension tower portion 120, a member for attaching the seat and a member for reinforcing the rear vehicle body frame member 100 can be a common member, and an increase in the number of the components can thereby be suppressed. Alternatively, a dedicated member for coupling the right rear suspension tower portion 110 and the left rear suspension tower portion 120 may be provided.

The above-described embodiment is merely illustrative in all respects, and should not be construed in a limited manner. Furthermore, all modifications and variations that fall within the scope equivalent to the claims are intended to fall within the scope of the invention. For example, the upper coupling member 150 may couple the right damper attachment portion 112 and the left damper attachment portion 122.

Alternatively, one of the upper coupling member 150 and the lower coupling member 160 may be omitted. The upper coupling member 150 may integrally or unitarily be molded with the right rear suspension tower portion 110 and the left rear suspension tower portion 120 by casting. The lower coupling member 160 may integrally or unitarily be molded with the right rear suspension tower portion 110 and the left rear suspension tower portion 120 by casting.

The lower coupling member 160 may be formed of a single member that extends in the left-right direction without being formed of the right cross member 14, the left cross member 15, and the tunnel member 10a. The lower coupling member 160 may be formed of a press-molded plate material or may be an extruded member. The lower coupling member 160 may integrally or unitarily be molded with the right rear suspension tower portion 110 and the left rear suspension tower portion 120 by casting.

The invention can also be applied to a front vehicle body structure of the automobile 1. For example, a coupling member that couples the right front suspension tower portion 51 and the left front suspension tower portion 52 of the front cast member 50 may be provided. In this case, the coupling portion 80 of the front cast member 50 is a portion corresponding to the intermediate portion.

### [Industrial Applicability]

As it has been described so far, the present invention can be used for a vehicle body frame member of an automobile, for example.

### [Reference Signs List]

1: automobile
10: floor panel
10a: tunnel member
11: tunnel portion
14: right cross member
15: left cross member
110: right rear suspension tower portion
112: right damper attachment portion
118: right coupling portion
120: left rear suspension tower portion
122: left damper attachment portion
128: left coupling portion
130: intermediate portion
150: upper coupling member
160: lower coupling member
D1, D2: Damper

## Claims

1. A vehicle body structure (A) comprising:
a vehicle body frame member (50, 100) that is integrally or unitarily molded by casting in a state where a right suspension tower portion (51, 110) and a left suspension tower portion (52, 120) are coupled by an intermediate portion (80, 130) in a vehicle width direction; and
a coupling member (150, 160) that extends in a left-right direction at a position away from the intermediate portion (80, 130) in a vehicle front-rear direction and/or an up-down direction and couples a right side and a left side of the vehicle body frame member (50, 100).

2. The vehicle body structure (A) according to claim 1, further comprising
a right coupling portion (118), to which a right side of the coupling member (150) can be coupled, wherein the right coupling portion (118) is provided in an upper portion of the right suspension tower portion (51, 110); and
a left coupling portion (128), to which a left side of the coupling member (150) can be coupled, wherein the left coupling portion (128) is provided in an upper portion of the left suspension tower portion (52, 120).

3. The vehicle body structure (A) according to claim 2, wherein
the right suspension tower portion (110) includes or is provided with a right damper attachment portion (112), to which an upper portion of a right damper (D1) of a suspension device is attached,
the right coupling portion (118) is separated upward from the right damper attachment portion (112),
the left suspension tower portion (120) includes or is provided with a left damper attachment portion (122), to which an upper portion of a left damper (D2) of the suspension device is attached, and
the left coupling portion (128) is separated upward from the left damper attachment portion (122).

4. The vehicle body structure (A) according to any one of the preceding claims, wherein
the coupling member (150, 160) includes:
an upper coupling member (150) that couples an upper portion of the right suspension tower portion (110) and an upper portion of the left suspension tower portion (120); and/or
a lower coupling member (160) that couples a lower portion of the right suspension tower portion (51, 110) and a lower portion of the left suspension tower portion (52, 120).

5. The vehicle body structure (A) according to claim 4, wherein
the upper coupling member (150) is separated rearward in a vehicle from the intermediate portion (130), and/or
the lower coupling member (160) is separated forward in the vehicle from the intermediate portion (130).

6. The vehicle body structure (A) according to any one of the preceding claims, further comprising:
a floor panel (10) formed with a tunnel portion (11) that bulges upward in a central portion in the left-right direction and extends in the vehicle front-rear direction;
a right cross member (14) that extends from a right side of the floor panel (10) to a right side surface of the tunnel portion (11) in an upper surface of the floor panel (10);
a left cross member (15) that extends from a left side of the floor panel (10) to a left side surface of the tunnel portion (11) in the upper surface of the floor panel (10); and
a tunnel member (10a) that extends across the tunnel portion (11) in the left-right direction in a lower surface of the floor panel (10), wherein
a right side of the right cross member (14) is coupled to a lower portion of the right suspension tower portion (51, 110),
a left side of the left cross member (15) is coupled to a lower portion of the left suspension tower portion (52, 120),
a right side of the tunnel member (10a) is coupled to a left side of the right cross member (14),
a left side of the tunnel member (10a) is coupled to a right side of the left cross member (15), and
the right cross member (14), the left cross member (15), and the tunnel member (10a) constitute the coupling member (160).

7. The vehicle body structure (A) according to claim 6, wherein
a vehicle rear portion of the tunnel portion (11) is connected to the intermediate portion (130).

8. The vehicle body structure (A) according to any one of claims 1 to 5, further comprising
a floor panel (10) formed with a tunnel portion (11) that bulges upward in a central portion in the left-right direction and extends in the vehicle front-rear direction, wherein
a vehicle rear portion of the tunnel portion (11) is connected to the intermediate portion (130).

9. The vehicle body structure (A) according to claim 7 or 8, wherein
the intermediate portion (130) includes a curved plate portion (131) curved upward, and
the tunnel portion (11) is connected to the curved plate portion (131).

10. The vehicle body structure (A) according to claim 9, further comprising one or plural ribs (131a), each of which protrudes upward and/or extends forward on a surface or an upper surface of the cured plate portion (131).

11. The vehicle body structure (A) according to any one of the preceding claims, wherein
the position at which the coupling member (150, 160) extends in the left-right direction is away from the intermediate portion (80, 130) by a predetermined distance in the vehicle front-rear direction and/or the up-down direction.

12. The vehicle body structure (A) according to any one of the preceding claims, further comprising a rib (140) that extends or continues from the right suspension tower portion (110) to the intermediate portion (130) and extends or continues to the left suspension tower portion (120).

13. A vehicle (1) comprising the vehicle body structure (A) according to any one of the preceding claims.

14. The vehicle (1) according to claim 13 referring to claim 6 or 7, further comprising:
a first seat (30) attached to the right cross member (14); and
a second seat (40) attached to the left cross member (15).

15. A method of manufacturing a vehicle body structure (A), comprising:
integrally or unitarily molding, by casting, a vehicle body frame member (50, 100) in a state where a right suspension tower portion (51, 110) and a left suspension tower portion (52, 120) are coupled by an intermediate portion (80, 130) in a vehicle width direction; and
providing a coupling member (150, 160) that extends in a left-right direction at a position away from the intermediate portion (80, 130) in a vehicle front-rear direction and/or an up-down direction and couples a right side and a left side of the vehicle body frame member (50, 100).
